# EUROPÄISCHE PATENTSCHRIFT

(11) **EP 1 372 868 B1**
(45) Veröffentlichungstag und Bekanntmachung des Hinweises auf die Patenterteilung: **13.06.2007**
(21) Anmeldenummer: 02718169.2
(22) Anmeldetag: 02.03.2002
(51) Int. Cl.: B05B 15/12

(54) **ANLAGE ZUM PULVERLACKIEREN VON GEGENSTÄNDEN**
INSTALLATION FOR POWDER PAINTING OBJECTS
INSTALLATION POUR LE PEINTURAGE A LA POUDRE D'OBJETS

(30) Priorität: 28.03.2001 DE 10115376
(43) Veröffentlichungstag der Anmeldung: 02.01.2004
(73) Patentinhaber: EISENMANN Anlagenbau GmbH & Co. KG, 71032 Böblingen (DE)
(72) Erfinder: POHL, Werner, 75387 Neubulach (DE); BEZNER, Wolfgang, 71101 Schönaich (DE); HANF, Jürgen, 72070 Tübingen (DE); ABEL, Peter, 72213 Altensteig (DE)
(74) Vertreter: Ostertag, Reinhard
(86) Internationale Anmeldenummer: PCT/EP2002/002265
(87) Internationale Veröffentlichungsnummer: WO 2002/078858

(56) Entgegenhaltungen:
- DE-A- 19 500 872
- US-A- 4 301 764
- US-A- 4 823 731
- US-A- 5 288 324
- PATENT ABSTRACTS OF JAPAN vol. 008, no. 184 (C-239), 23. August 1984 (1984-08-23) -& JP 59 080359 A (AMANO KK), 9. Mai 1984 (1984-05-09)

## Beschreibung

Die Erfindung betrifft eine Anlage zum Pulverlackieren von Gegenständen, insbesondere von Fahrzeugkarosserien, mit
a) einer Lackierkabine, in welcher die Gegenstände während des Lackiervorganges anordenbar sind;
b) einer Mehrzahl von Applikationseinrichtung für das Lackpulver, die im Innenraum der Lackierkabine anordenbar sind und mit denen die dort befindlichen Gegenstände beaufschlagbar sind;
c) einer Rückgewinnungseinrichtung für Pulver-Overspray, die ihrerseits umfaßt:
   ca) einen am Boden der Lackierkabine angeordneten Sammeltrichter, der eine untere Auslaßöffnung aufweist;
   cb) einen Sammelbehälter für wiedergewonnenes Lackpulver;
   cc) eine Abscheideeinrichtung;
   cd) ein Sauggebläse, welches das sich im Sammeltrichter sammelnde Lackpulver durch die Auslaßöffnung des Sammeltrichters in die Abscheideeinrichtung saugt.

Beim Lackieren, auch beim elektrostatischen Pulverlackieren, von Gegenständen ist es unvermeidlich, daß ein Teil des die Applikationseinrichtungen verlassenden Lackpulvers nicht auf den Gegenständen haften bleibt sondern als sogenannter "Overspray" sich an den Seitenwänden niederschlägt oder im Bodenbereich der Lackierkabine sammelt. Da dieser Overspray einen erheblichen materiellen Wert darstellt, ist es üblich, diesen anzusaugen, mit Hilfe einer Abscheideeinrichtung wiederzugewinnen und sodann erneut dem Lackiervorgang zuzuführen. Als Abscheideinrichtung kommt dabei insbesondere eine Filtereinrichtung oder ein Zyklon in Frage.

Ein Problem stellt der in der Lackierkabine, insbesondere auch an den Wandungen der Lackierkabine selbst, im zur Rückgewinnung verwendeten Sammeltrichter und in den Absaugleitungen der Rückgewinnungseinrichtung befindliche Overspray dann dar, wenn von einer Farbe des Lackpulvers zu einer anderen Farbe gewechselt werden soll. Dann ist eine außerordentlich gründliche Reinigung aller Teile der Lackieranlage erforderlich, die bei dem vorhergehenden Lackiervorgang mit Lackpulver in Berührung gekommen sind. Anderenfalls droht die Gefahr, daß Lackpulver aus dem vorausgegangenen Lackiervorgang sich mit dem andersfarbigen Lackpulver vermischt, welches gerade verarbeitet wird, wodurch die aufgebrachte Lackierung fehlerhaft wird. Bereits geringfügige Verunreinigungen des Lackpulvers wirken sich schädlich auf die Qualität der Lackierung aus.

Soweit in einer Lackieranlage große Serien von Gegenständen lackiert werden, die dieselbe Farbe aufweisen, und daher der Reinigungsvorgang nur in sehr großen Zeitabständen erforderlich ist, fallen der Aufwand und die Stillstandszeit, die mit dieser Reinigung verbunden ist, nicht besonders ins Gewicht. Dies ändert sich, wenn ein häufiger Wechsel des Farbtones des Lackpulvers gewünscht ist, insbesondere bei kleineren zu lackierenden Serien. Hier muß Sorge dafür getragen werden, daß der Farbwechsel rasch und mit geringem Reinigungsaufwand durchgeführt werden kann.

Eine Lackieranlage der eingangs genannten Art ist in der DE 195 00 872 A1 beschrieben. Hier wird versucht, das oben geschilderte Problem dadurch anzugehen, daß der Boden der Lackierkabine in zwei unterschiedliche Bereiche eingeteilt wird: Die radial weiter außenliegenden Bereiche, die den Seitentwänden der Lackierkabine benachbart sind, werden gesondert abgesaugt, so daß insbesondere das sich von den Seitenwänden lösende Lackpulver getrennt abgeführt und dann verworfen werden kann. Von diesem Lackpulver wird angenommen, daß es möglicherweise aus vorausgegangenen Lackiervorgängen verunreinigt ist. Im mittleren Bereich des Bodens dagegen ist eine Rückgewinnungseinrichtung für Lackpulver angebracht, die einen Sammeltrichter aufweist. Das in in diesen Sammeltrichter gelangende Lackpulver wird als unkontaminiert betrachtet und der Wiederverwendung zugeführt. Die Gegenstände werden hängend mittels einer Fördereinrichtung während des Lackiervorganges durch die Lackierkabine transportiert und dabei von allen Seiten mit derselben Farbe von mehreren Applikationseinrichtungen beaufschlagt.

Die Hoffnung bei dieser Konstruktion ist, die Seitenwände der Lackierkabine bei einem Farbwechsel nicht gründlich reinigen zu müssen.

Die in der DE 195 00 872 A1 beschriebene Lackiereinanlage weist mehrere Nachteile auf: Zum einen ist die Trennung zwischen sauberem Lackpulver, das im Mittelbereich des Bodens abgesaugt wird, und verunreinigtem Lackpulver, welches im Bereich der Seitenwände der Lackierkabine abgeführt wird, nicht wirklich scharf. Um sicherzu stellen, daß der Wiederverwertung tatsächlich nur völlig sauberes Lackpulver zugeführt wird, muß der radial außen liegende Ringbereich, in dem das Lackpulver verworfen wird, vergleichsweise groß gehalten werden; es muß viel Overspray aus Vorsichtsgründen geopfert werden. Zum anderen läßt sich bei dieser Vorrichtung nicht vermeiden, daß alle Teile, die zu der Rückgewinnungseinrichtung selbst gehören, bei einem Farbwechsel gründlich gereinigt werden müssen.

Aufgabe der vorliegenden Erfindung ist, eine Lackieranlage der eingangs genannten Art so auszugestalten, daß sie variabel einsetzbar ist und insbesondere ein Farbwechsel rasch durchgeführt werden kann.

Diese Aufgabe wird erfindungsgemäß dadurch gelöst, daß
d) in der Lackierkabine ein Drehgestell angeordnet ist, auf dem die Gegenstände befestigbar sind und das um eine im wesentlichen vertikale Achse verdrehbar ist;
e) in unterschiedlichen winkelpositionen bezogen auf die Achse des Drehgestells angeordnete Applikationseinrichtungen mit Lackpulver unterschiedlicher Farbe beschickbar sind;
f) eine Mehrzahl von Rückgewinnungseinrichtungen vorgesehen ist, die wahlweise mit der Auslaßöffnung des Sammeltrichters in Verbindung gebracht werden können.

Die erfindungsgemäße Lackieranlage läßt sich in gewisser Weise als Kombination einer Vielzahl von Lackieranlagen verstehen, die jeweils nur für den Betrieb mit einer Farbe bestimmt sind. Dies bedeutet, daß in der Lackierkabine unterschiedliche Applikationseinrichtungen vorgehalten werden, die mit unterschiedlichen Farben beschickbar sind. Um gleichwohl die Gegenstände von allen Seiten mit Lackpulver beaufschlagen zu können, sieht die Erfindung in der Lackierkabine ein Drehgestell vor, auf dem die zu lackierenden Gegenstände plaziert und mit dessen Hilfe sie an der die jeweilige Farbe verarbeitenden Applikationseinrichtung vorbeigedreht werden können. Auch die Rückgewinnungseinrichtung für den Overspray ist mehrfach vorgesehen, für jede Farbe gesondert. Ein Farbwechsel kann also einfach dadurch vollzogen werden, daß einerseits unterschiedliche Applikationseinrichtungen in der Lackierkabine aktiviert werden und daß andererseits unterschiedliche, entsprechende Rückgewinnungseinrichtungen mit der Auslaßöffnung des Sammeltrichters verbunden werden.

Die Anzahl der Rückgewinnungseinrichtungen gibt die maximale Zahl von Lackpulverfarben vor, die in der erfindungsgemäßen Lackieranlage verarbeitet werden können. Die Anzahl der Applikationseinrichtungen sollte mindestens der Anzahl der Rückgewinnungseinrichtung entsprechen, kann jedoch auch größer sein. Im ersten Falle werden die Gegenstände jeweils nur aus einer einzigen Applikationseinrichtung mit Lackpulver beaufschlagt, im zweiten Falle aus mehreren.

Die größte Variabilität bei geringsten apparativen Aufwand besitzt die erfindungsgemäße Lackieranlage, wenn tatsächlich jede Applikationseinrichtung eine andere Lackpulverfarbe verarbeitet. Da dann im allgemeinen die Gegenstände auf dem Drehgestell um volle 360° verdreht werden müssen, um sie von allen Seiten zu lackieren, benötigt der Lackiervorgang verhältnismäßig viel Zeit. Wenn daher die Lackieranlage nicht zur Verarbeitung der maximal möglichen Zahl unterschiedlicher Farben benötigt wird, können auch mehrere Applikationseinrichtungen mit derselben Farbe beschickt werden, so daß ein kleinerer Drehwinkel zur vollständigen Lackierung der Gegenstände ausreicht. Hierdurch läßt sich die Dauer des Lackiervorganges verringern und damit der Durchsatz der Lackieranlage erhöhen. Im Extremfall läßt sich die erfindungsgemäße Lackieranlage auch in konventioneller Weise betreiben, d.h. die Applikationseinrichtungen können alle mit derselben Farbe beschickt und auf eine Verdrehung der Gegenstände beim Lackiervorgang kann verzichtet werden. Die erfindungsgemäße Lackieranlage kann also sehr flexibel eingesetzt werden.

Zweckmäßig ist, wenn eine Reinigungsvorrichtung vorgesehen ist, mit welcher Lackpulver von den Wänden der Lackierkabine lösbar ist, und wenn eine Sammeleinrichtung für Abfallpulver vorgesehen ist, welche während der Tätigkeit der Reinigungsvorrichtung in Verbindung mit der Auslaßöffnung des Sammeltrichters gebracht werden kann. Diese Reinigungsvorrichtung wird also nach Abschluß des Lackiervorgangs mit einer bestimmten Farbe aktiviert; sie reinigt die Wände der Lackierkabine selbst und ggf. des Sammeltrichters. Das so gelöste Lackpulver wird von einer gesonderten Sammeleinrichtung gesammelt und verworfen.

Zweckmäßigerweise ist die Reinigungsvorrichtung eine Blasvorrichtung. Diese kann ein in axialer Richtung verschiebbares und um seine Achse verdrehbares Rohr umfassen. Dieses Rohr kann beispielsweise von oben her progressiv in die Lackierkabine eingeschoben werden und bläst dabei unter gleichzeitiger Verdrehung um seine Achse alle Wände der Lackierkabine ab.

Die Blasvorrichtung ist besonders effizient und erreicht auch weniger leicht zugängliche Stellen, wenn am Ende des Rohrs ein um eine zur Achse des Rohrs senkrechte Achse verschwenkbarer Blasarm angebracht ist.

Bei einer besonders bevorzugten Ausführungsform der erfindungsgemäßen Anlage ist am unteren Ende des Sammeltrichters ein die Auslaßöffnung umgebender Flansch vorgesehen, wobei jede Pulverrückgewinnungseinrichtung einen Saugrüssel aufweist, der zwischen einer ersten Position, in der seine Ansaugöffnung durch den Flansch verschlossen ist, und einer zweiten Position, in welcher seine Ansaugöffnung mit der Auslaßöffnung des Sammeltrichters kommuniziert, hin- und herbewegbar ist. Diese Ausgestaltung kommt ohne gesonderte Ventile zur wahlweisen Verbindung der verschiedenen Pulverrückgewinnungseinrichtungen mit dem Sammeltrichter aus. Es genügt, den jeweiligen Saugrüssel unter die Auslaßöffnung des Sammeltrichters zu schieben.

Wie bereits oben erwähnt, weist die in der DE 195 00 872 A beschriebene Lackieranlage ein Hängefördersystem auf, mit dem die zu lackierenden Gegenstände kontinuierlich in einer Richtung durch die Lackierkabine hindurch transportiert werden. Nachteilig hierbei ist, daß die Fördertechnikkomponenten die Lackierkabine verschmutzen können. Deshalb ist bei einem bevorzugten Ausführungsbeispiel der Erfindung vorgesehen, daß das Fördersystem einen Shuttle-Förderer aufweist, der in der Lage ist, mindestens einen Gegenstand in einer ersten Position außerhalb der Lackierkabine von einem anderen Teil des Fördersystems zu übernehmen und den Gegenstand in eine zweite Position innerhalb der Lackierkabine zu bringen. Dieser Shuttle-Förderer kann so ausgestaltet sein, daß alle seine Komponenten, von denen eine Verschmutzung ausgehen kann, ständig außerhalb der eigentlichen Lackierkabine bleiben. Dies ist insbesondere dadurch erreichbar, daß der Shuttle-Förderer einen auskragenden Ausleger aufweist, der in der zweiten Position in die Lackierkabine hineinragt.

Dabei wird wiederum besonders bevorzugt, wenn am Endbereich des Auslegers das Drehgestell angeordnet ist. Die zu lackierenden Gegenstände werden also bereits außerhalb der Lackierkabine auf das Drehgestell aufgesetzt und so mit Hilfe des Shuttle-Förderers in die Lackierkabine eingebracht. Ein gesondertes Umsetzen der zu lackierenden Gegenstände innerhalb der Lackierkabine auf das Drehgestell ist dann nicht mehr erforderlich.

Bei kleineren Serien, die keinen großen Durchsatz der Lackieranlage erfordern, wird zweckmäßigerweise diejenige Ausgestaltung der Erfindung eingesetzt, bei welcher der Shuttle-Förderer in der Lage ist, den mindestens einen Gegenstand von seiner zweiten Position innerhalb der Lackierkabine wieder zurück in seine erste Position auf dem anderen Teil des Fördersystems zu bringen. Die Gegenstände bewegen sich also an der selben Stelle wieder aus der Lackierkabine heraus, an der sie in diese eingetreten sind. Dies hat den Vorteil, daß vergleichsweise viele Applikationseinrichtungen um die Lackierkabine herum angeordnet werden können, da nur an einer Seite ein die Anbringung von Applikationseinrichtungen verhinderndes Tor vorhanden ist.

Wird dagegen ein hoher Durchsatz der Lackieranlage gewünscht, kann diejenige Ausgestaltung der Erfindung zum Einsatz gebracht werden, bei welcher ein zweiter Shuttle-Förderer vorgesehen ist, welcher in der Lage ist, den mindestens einen Gegenstand in dessen zweiter Position innerhalb der Lackierkabine zu übernehmen und in einer dritten Position außerhalb der Lackierkabine an einen weiteren Teil des Fördersystems zu übergeben. Hier treten also die Gegenstände an einer anderen Stelle aus der Lackierkabine aus, als sie eintreten. Dies hat den Vorteil, daß die Lackieranlage im Durchlaufbetrieb gefahren werden kann. Es lassen sich jeodch nicht so viele Applikationseinrichtungen an der Lackierkabine unterbringen.

Ausführungsbeispiele der Erfindung werden nachfolgend anhand der Zeichnung näher erläutert; es zeigen
- Figur 1: einen Vertikalschnitt durch ein erstes Ausführungsbeispiel einer Lackieranlage;
- Figur 2: einen Horizontalschnitt durch die Lackieranlage von Figur 1 gemäß der dortigen Linie II-II;
- Figur 3: einen weiteren Horizontalschnitt durch die Lackieranlage von Figur 1 gemäß der dortigen Linie III-III;
- Figur 4: einen Vertikalschnitt durch ein zweites Ausführungsbeispiel einer Lackieranlage;
- Figur 5: einen Horizontalschnitt durch die Lackieranlage von Figur 4 gemäß der dortigen Linie V-V;
- Figur 6: einen weiteren Horizontalschnitt durch die Lackieranlage von Figur 4 gemäß der dortigen Linie VI-VI.

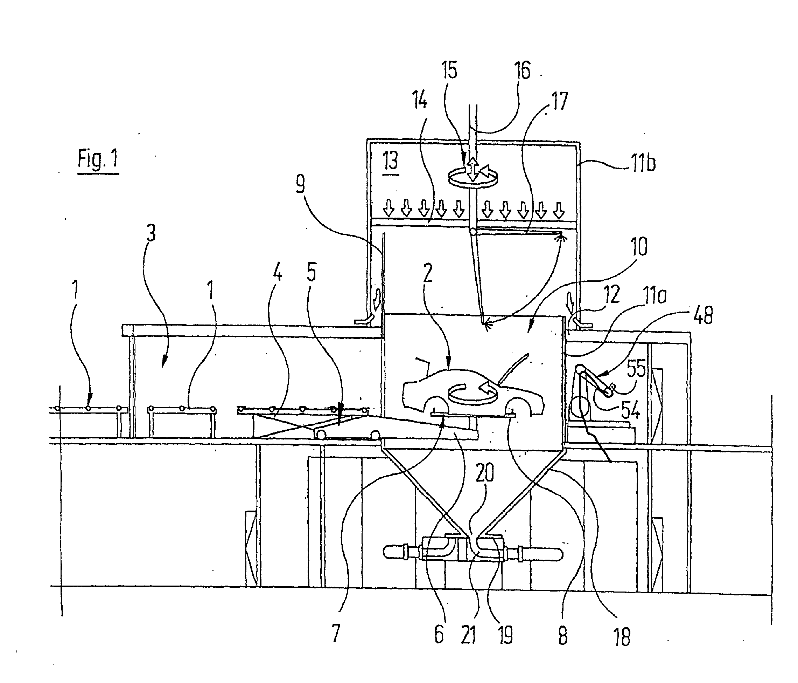

Die in den Figuren 1 bis 3 dargestellte Lackieranlage umfaßt einen Förderer 1, der die zu lackierenden Gegenstände, im dargestellten Ausführungsbeispiel Karosserien 2, zuführt. Die Karosserien 2 werden zunächst in einen Vorraum 3 eingebracht und dort mit Hilfe des Förderers 1 auf ein Hubgestell 4 aufgesetzt. Das Hubgestell 4 ist in der Lage, die Karosserien 2 aus der Förderebene des Förderers 1 etwas anzuheben, so daß ein verfahrbarer Shuttle-Förderer 5 sich unter die angehobene Karosserie 2 bewegen kann. Der Shuttle-Förderer 5 hat seinen Namen daher, daß er sich zwischen zwei Positionen ständig hin- und herbewegt. Eine dieser Positionen ist die soeben angesprochene, in der er sich, vollständig in den Vorraum 3 zurückgezogen, unterhalb der vom Hubgestell 4 angehobenen Karosserie 2 befindet.

Der Shuttle-Förderer 5 weist einen ausladenden Arm 6 auf, an dessen Ende ein um eine vertikale Achse drehbares Drehgestell 7 angeordnet ist. Das Drehgestell 7 läßt sich durch einen nicht dargestellten Motor in Drehung versetzen; es weist eine im wesentlichen horizontale Aufnahme 8 für jeweils eine Karosserie 2 auf.

In der ersten, oben schon erwähnten Position des Shuttle-Förderers 5 befindet sich das Drehgestell 8 unterhalb der angehobenen Karosserie 2. Wird diese Karosserie 2 durch Absenken des Hubgestells 4 nach unten bewegt, setzt sie sich auf die Aufnahme 8 des Shuttle-Förderers auf.

An den Vorraum 3 der Lackieranlage grenzt die eigentliche Lackierkabine 10, die gegen den Vorraum 3 durch ein vertikal bewegbares Tor 9 verschlossen werden kann.
Die Lackierkabine 10 weist eine in der Draufsicht kreisförmige Seitenwand 11 auf, die im oberen Bereich 11b einen größeren Durchmesser hat als im unteren Bereich 11a, in dem sich im wesentlichen die Spritzvorgänge abspielen. Der sich so bildende Ringspalt 12 zwischen den beiden Bereichen 11a, 11b der Seitenwand 11 wird zum Absaugen des oberen Innenraumbereichs der Lackierkabine 10 genutzt; die hierfür eingesetzten Gebläse und Leitungen sind der Übersichtlichkeit halber nicht dargestellt. Durch die geschilderte Absaugung werden vagabundierende Lackpulverteilchen aus dem oberen Innenraumbereich der Lackierkabine 10 entfernt, sodaß im allgemeinen eine weitere Reinigung des oberen Seitenwandbereiches 11b nicht unbedingt erforderlich ist.

Im obersten Bereich des Innenraums der Lackierkabine ist ein Luftplenum 13 vorgesehen, das nach unten durch eine Filterdecke 14 begrenzt ist. Dem Luftplenum 13 wird über eine in der Zeichnung nicht dargestellte Leitung Frischluft zugeführt, die im Sinn der Pfeile durch die Filterdecke 14 hindurch in den darunter liegenden Innenraum der Lackierkabine 10 eingebracht wird.

Durch die oberste Decke der Lackierkabine 10 sowie durch die Filterdecke 14 hindurch erstreckt sich mittig eine Blaseinrichtung, die insgesamt mit dem Bezugszeichen 15 versehen ist. Die Blaseinrichtung 15 umfaßt ein vertikal verlaufendes und darüber hinaus in vertikaler Richtung bewegliches Rohr 16, welches an seinem unteren Ende gelenkig mit einem Blasarm 17 verbunden ist. Der Blasarm 17 läßt sich, wie in der Zeichnung schematisch angedeutet, so verschwenken, daß er in der einen Endposition praktisch eine koaxiale Fortsetzung des Rohrs 16 darstellt und in der anderen Endposition mit diesem einen rechten Winkel einschließt.

Die gesamte Blaseinrichtung 15 läßt sich nicht nur, wie schon erwähnt, vertikal bewegen sondern auch noch um die Achse des Rohrs 16 verdrehen.

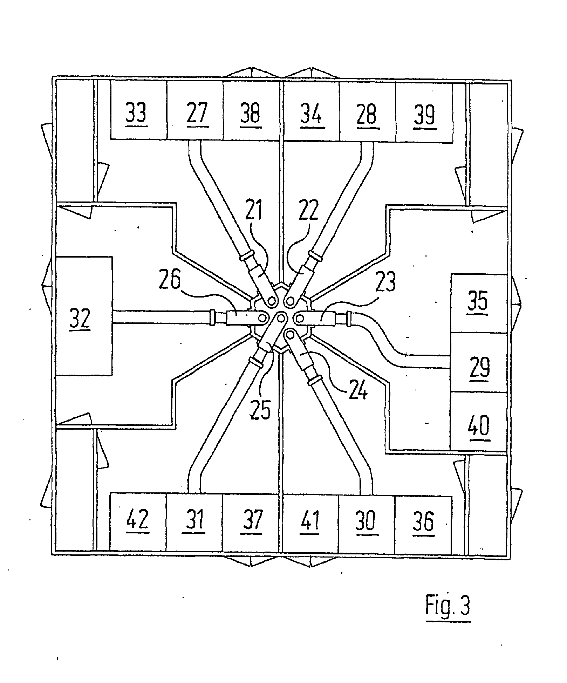

Der Boden der Lackierkabine 10 wird von einem Sammeltrichter 18 gebildet, an den unten ein radial nach außen ragender Ringflansch 19 angeformt ist. Unter die untere Auslaßöffnung 20 des Sammeltrichters 18 läßt sich wahlweise die Ansaugöffnung eines von insgesamt sechs gekrümmten Saugrüssels 21, 22, 23, 24, 25, 26 schieben. Die Ansaugöffnungen der jeweils nicht unter die Auslaßöffnung 20 des Sammeltrichters 18 geschobenen Saugrüssel (in Figur 3 also der Saugrüssel 21, 22, 23, 24, und 26) sind nach oben durch den Flansch 19 abgedeckt und somit verschlossen.

Wie Figur 3 zeigt, sind die Saugrüssel 21, 22, 23, 24, 25, 26 im Untergeschoß der Lackieranlage jeweils mit einer Abscheideeinrichtung 27, 28, 29, 30, 31, 32, z.B. ein Filter oder ein Zyklon verbunden. Jeder dieser Abscheideeinrichtungen 27 bis 32 sind ein Sauggebläse und ein Sammelbehälter zugeordnet, die aus Übersichtlichkeitsgründen in Figur 3 nicht dargestellt sind. Die Anordnung kann auch so sein, daß alle Abscheideeinrichtungen 27 bis 32 über ein Rohrsystem mit einem einzigen Sauggebläse verbunden sind, wobei jeder Abscheideeinrichtung 27 bis 32 eine Klappe zugeordnet ist, die im Grundzustand geschlossen ist und nur für diejenige Abscheideeinrichtung 27 bis 32 geöffnet ist, die gerade aktiv ist.

Beidseits der Abscheideeinrichtungen 27 bis 31 sind jeweils ein Aufbewahrungsbehälter 33, 34, 35, 36, 37 für frisches Farbpulver sowie ein Aufbewahrungsbehälter 38, 39, 40, 41, 42 für Mischpulver, das aus frischem Farbpulver und wiedergewonnenem Farbpulver zusammengesetzt ist, vorgesehen. Die Abscheideeinrichtung 32 spielt eine weiter unten erläuterte Sonderrolle; ihr gehören derartige zusätzliche Aufbewahrungsbehälter nicht zu.

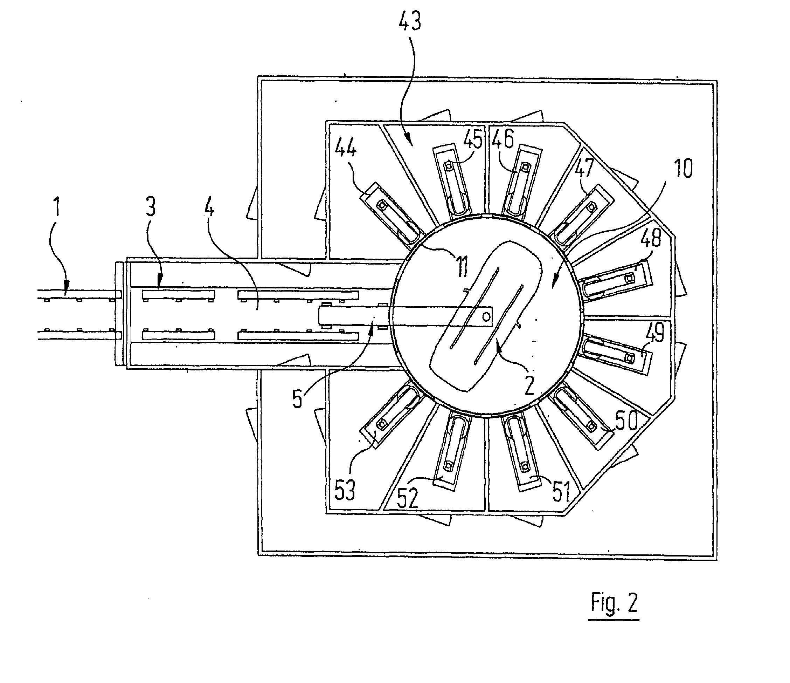

Wie Figur 2 zeigt, sind im "Erdgeschoß" der Lackieranlage in einem die eigentliche Lackierkabine 10 umgebenden Raum 43 insgesamt 10 Lackierroboter 44, 45, 46, 47, 48, 49, 50, 51, 52, 53, angeordnet. Jeder Lackierroboter 44 bis 53 weist einen in bekannte Weise um mehrere Achsen schwenk- und drehbaren Roboterarm 54 auf, wie dies in Figur 1 für den Lackierroboter 48 dargestellt ist. Die Roboterarme 54 tragen jeweils an ihrem Ende eine Applikationseinrichtung 55 zur Auftragung des Pulverlacks, beispielsweise einen Hochrotationszerstäuber, und können durch ein Fenster der Seitenwand 11 in das Innere der Lackierkabine 10 eingeführt werden.

Bei der beschriebenen Lackieranlage sind jeweils zwei diametral gegenüberliegende Lackierroboter 44 bis 53 mit Lackpulver der selben Farbe bestückt.

Die beschriebene Lackieranlage arbeitet wie folgt:

Eine zu lackierende Karosserie 2 wird über den Förderer 1 in den Vorraum 3 eingebracht und auf das Hubgestell 4 aufgesetzt. Dort wird sie, wie schon geschildert, etwas angehoben, so daß der Shuttle-Förderer 5 mit der Aufnahme 8 seines Drehgestells 7 unter die Karosserie 2 fahren kann. Durch Absenken des Hubgestells 4 wird nun die Karosserie 2 auf der Aufnahme 8 des Shuttle-Förderers 5 aufgesetzt. Der Shuttle-Förderer 5 bewegt sich mitsamt der Karosserie 2 in Richtung der Lackierkabine 10, bis sich die Achse des Drehgestells 7 etwa in der Achse der Lackierkabine 10 befindet. Dies ist die in Figur 1 dargestellte Position. Alle Teile des Shuttle-Förderers 5, von denen eine Verschmutzung ausgehen könnte, befinden sich dabei außerhalb der Lackierkabine 10. Nur der Ausleger 6 ragt in den Innenraum der Lackierkabine 10 hinein.

Nun wird das Tor 9 durch Absenken geschlossen. Dieses Tor 9 besitzt eine Ausnehmung derart, daß der Ausleger 6 durchgeführt werden kann, während im übrigen die Verbindung zwischen dem Innenraum der Lackierkabine 10 und dem Vorraum 3 unterbrochen ist.

Die in der Lackierkabine 10 befindliche Karosserie 2 kann nunmehr in einem von fünf unterschiedlichen Farbtönen lackiert werden. Die beiden Lackierroboter 44 bis 53, welche mit der entsprechenden Farbe bestückt sind, bewegen ihren Roboterarm 54 mit der Applikationseinrichtung 55 durch die entsprechenden Fenster der Ringwand 11 in den Innenraum der Lackierkabine 10. Die Applikationseinrichtungen 55 beginnen zu arbeiten. Gleichzeitig wird das Drehgestell 7 kontinuierlich oder intermittierend in Drehung versetzt. Auf diese Weise kann die Karosserie 2 von zwei Seiten her unter Drehung des Drehgestells 7 von etwa 180° vollständig lackiert werden.

Ist der Lackiervorgang abgeschlossen, fahren die im Einsatz befindlichen Lackierroboter 44 bis 53 ihre Roboterarme 54 wieder in die in den Figuren 1 und 2 dargestellte Position zurück. Das Tor 9 wird durch Anheben geöffnet. Der Shuttle-Förderer 5 fährt wieder in den Vorraum 3 zurück. Durch Anheben des Hubgestells 4 wird die Karosserie 2 von dem Shuttle-Förderer 5 abgenommen, der dann wieder etwas in Richtung der Lackierkabine 10 fährt. Die lackierte Karosserie 2 wird in die Höhe des Förderers 1 gebracht und dann aus dem Vorraum 3 wegtransportiert.

Während des Lackiervorgangs befindet sich derjenige Saugrüssel 21 bis 26, welcher der gerade verarbeiteten Farbe entspricht, unterhalb der Auslaßöffnung 20 des Sammeltrichters 18. Die in den Sammeltrichter 18 eingesaugten Lackpartikel werden daher der entsprechenden Filtereinrichtung 28 bis 32 zugeführt und im dortigen Sammelbehälter aufbewahrt. Sie können aus diesem entweder direkt den Applikationseinrichtungen 55 der entsprechenden Lackierroboter 44 bis 53 wieder zugeführt werden oder zunächst mit Frischpulver aus dem zugeordneten Vorratsbehälter 33 bis 37 vermischt in den Sammelbehälter 38 bis 42 verbracht und von dort dem Lackiervorgang erneut zugeführt werden.

Die im oberen Bereich der Lackierkabine 10 vagabundierenden Farbpulverteilchen, die dort nur eine sehr geringe Konzentration aufweisen, werden kontinuierlich über den Spalt 12 abgesaugt, gesammelt und verworfen, so daß der obere Bereich 11b der Ringwand 11 praktisch nicht verschmutzt.

Solange die Farbe nicht geändert werden muß, in welcher die Karosserien 2 lackiert werden sollen, wird der oben geschilderte Vorgang für jede einzelne Karosserie 2 wiederholt. Ist jedoch ein Farbwechsel gewünscht, so geschieht folgendes:

Unter die Auslaßöffnung 20 des Sammeltrichters 18 wird der Saugrüssel 26 geschoben, der mit der Filtereinrichtung 32 (vgl. Figur 3) verbunden ist. Nunmehr wird die Blaseinrichtung 15 in Funktion genommen, die unter gleichzeitigem Absenken, Verdrehen und Verschwenken des Blasarms 17 so nach unten geführt wird, daß die gesamte Innenfläche der Ringwand 11 sowie die Kegelfläche des Sammeltrichters 18 abgeblasen werden. Die sich hierbei von den Flächen lösenden Farbpulverpartikel werden über die Auslaßöffnung 20 des Sammeltrichters 18 ausgetragen und über den Saugrüssel 26 der Filtereinrichtung 32 zurückgeführt. Die sich hier sammelnden Farbpartikel werden verworfen.

Die Blaseinrichtung 15 wird nunmehr wieder nach oben in ihre Ruheposition gezogen. Die nächste Karosserie 2 kann in der beschriebenen Weise in die Lackierkabine 10 verbracht werden. Nun treten zwei andere Lackierroboter 44 bis 53, die mit Lackpulver der neuen Farbe bestückt sind, in Funktion; zuvor wird der entsprechende Saugrüssel 21 bis 25 unter die Auslaßöffnung 20 des Sammeltrichters 18 gebracht.

Bei einem in der Zeichnung nicht dargestellten Ausführungsbeispiel wird auf das Hubgestell 4 verzichtet. Statt dessen ist das Drehgestell 7 des Shuttle-Förderers 5 so ausgebildet, daß es sich vertikal bewegen kann. Die zur Übergabe der Karosserie vom Förderer 1 auf die Aufnahme 8 des Drehgestells 7 und umgekehrt erforderlichen Vertikalbewegungen werden in diesem Falle von dem Drehgestell 7 durchgeführt.

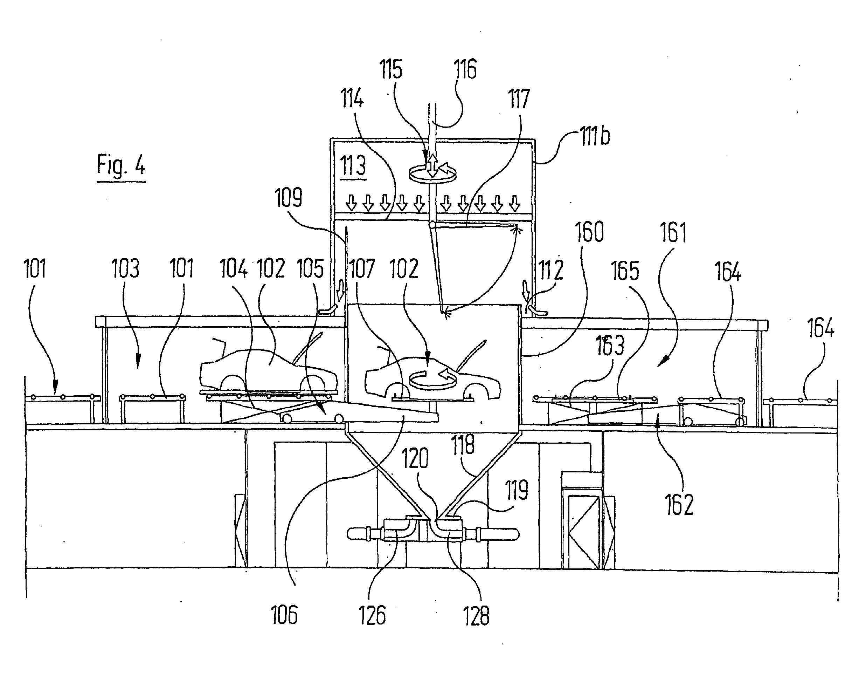

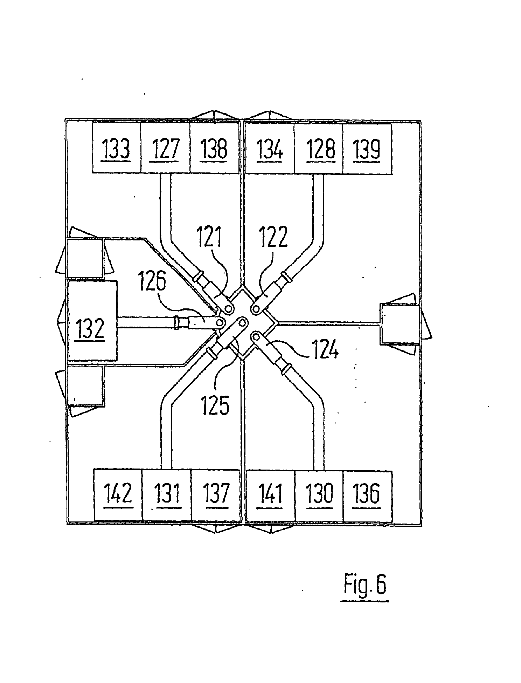

Das in den Figuren 4 bis 6 dargestellte Ausführungsbeispiel der Lackieranlage weist eine große Ähnlichkeit mit dem oben anhand der Figuren 1 bis 3 beschriebenen ersten Ausführungsbeispiel auf. Entsprechende Teile sind daher mit dem selben Bezugszeichen zuzüglich 100 gekennzeichnet.

Der Hauptunterschied des zweiten Ausführungsbeispiels gegenüber dem ersten ist darin zu sehen, daß es im Durchlaufverfahren betrieben wird.

In Figur 4 sind im wesentlichen unverändert aus Figur 1 wiederzuerkennen, der Förderer 101, der Vorraum 103, das Hubgestell 104 sowie der Shuttle-Förderer 105, das Tor 109 und die Lackierkabine 110.

Anders als die Lackierkabine 10 der Figuren 1 bis 3 weist die Lackierkabine 110 der Figuren 4 bis 6. dem Tor 109 diametral gegenüberliegend ein zweites Tor 160 auf. Dieses Tor 160 trennt den Innenraum der Lackierkabine 110 von einem Auslaßraum 161. Innerhalb des Auslaßraums 161 befinden sich ein weiterer Shuttle-Förderer 162, ein weiteres Hubgestell 163 und ein weiterer Förderer 164.

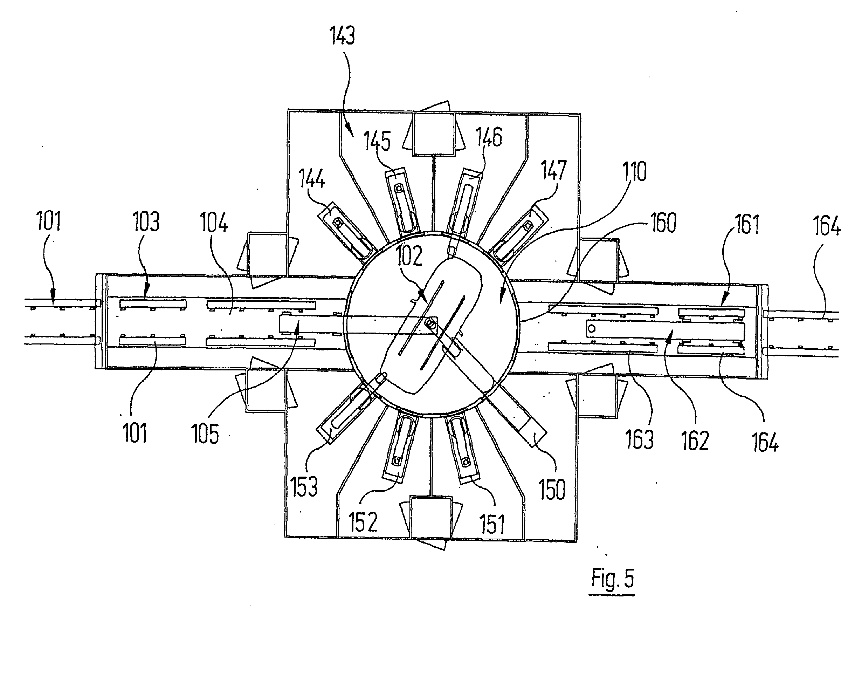

Wie insbesondere der Figur 5 zu entnehmen ist, sind wegen des Auslaßraums 161 beim zweiten Ausführungsbeispiel der Lackieranlage zwei Lackierroboter entfallen, nämlich die, die in Figur 2 die Bezugszeichen 48, 49 tragen. Die Lackieranlage nach den Figuren 4 bis 6 besitzt daher nur acht Lackierroboter 144 bis 147, 150 bis 153, welche die Lackierkabine 110 umgeben.

Entsprechend reduziert ist daher auch die Anzahl von Abscheideeinrichtungen 127, 128, 130, 131, 132, die sich im Untergeschoß der Lackieranlage befinden, sowie der Saugrüssel 121, 122, 124, 125, 126, deren Ansaugöffnung sich wahlweise unter die Auslaßöffnung 120 des Sammeltrichters 118 schieben läßt.

Der obere Bereich der Lackierkabine 110 ist gegenüber dem ersten Ausführungsbeispiel unverändert in der Ausgestaltung des Bereichs 111b der Seitenwand 111, des Luftplenums 113 und der Blaseinrichtung 115 sowie des Absaugspalts 112 zwischen dem oberen Bereich 111b und dem unteren Bereich 111a der Seitenwand 111.

Die Funktion des zweiten Ausführungsbeispiels einer Lackieranlage entspricht weitgehend derjenigen des ersten Ausführungsbeispiels:

Das Einbringen der Karosserien 102 in die Lackierkabine 110 sowie der eigentliche Lackiervorgang geschehen in genau der selben Weise wie beim ersten Ausführungsbeispiel. Der einzige Unterschied liegt darin, daß insgesamt die Wahl nur zwischen vier unterschiedlichen Farbtönen besteht, die jeweils zwei Lackierrobotern 144 bis 147 bzw. 150 bis 153 sowie einem Saugrüssel 121, 122, 124, 125 zugeordnet sind.

Nach beendetem Lackiervorgang werden die Karosserien 102 jedoch nicht rückwärts durch den Vorraum 103 aus der Lackierkabine 110 entfernt sondern mit Hilfe des zweiten Shuttle-Förderers 162 in "Vorwärtsrichtung" in den Auslaßraum 161 gebracht. Hierzu wird das zweite Tor 160 geöffnet und der zweite Shuttle-Förderer 162 fährt mit seiner Aufnahme 165 unter die Aufnahme 108 des ersten Shuttle-Förderers 105. Die Aufnahme 165 des zweiten Shuttle-Förderers 162 braucht nicht verdrehbar zu sein. Sie läßt sich jedoch in vertikaler Richtung bewegen. Die Geometrie der beiden Aufnahmen 108, 165 ist so aufeinander abgestimmt, daß sich die Aufnahme 165 des zweiten Shuttle-Förderers 162 bei einer Vertikalbewegung an der Aufnahme 108 des ersten Shuttle-Förderers 105 vorbei bewegen kann, so daß die Karosserie 2 von der Aufnahme 108 auf die zweite Aufnahme 165 übergeben wird. Ist dies geschehen, so fährt der erste Shuttle-Förderer 105 in den Vorraum 103 zurück, wo die nächste Karosserie 102 zum Lackieren wartet.

Der zweite Shuttle-Förderer 162 fährt so in den Auslaßraum 161, daß sich die Karosserie 102 oberhalb des Förderers 164 befindet. Durch Absenken der Aufnahme 165 wird die Karosserie 102 auf den Förderer 164 übergeben und von dort weggeführt.

Der bei einem Farbwechsel erforderliche Reinigungsvorgang wird beim Ausführungsbeispiel der Figuren 4 bis 6 in der selben Weise durchgeführt wie bei dem anhand der Figuren 1 bis 3 erläuterten Ausführungsbeispiel.

Bei beiden oben beschriebenen Ausführungsformen der Lackieranlage befindet sich das Drehgestell 7 bzw. 107, auf welchem die zu lackierenden Karosserien 2 bzw. 102 während des Lackiervorgangs verdreht werden, am Ende des Auslegers 6 bzw. 106 des ersten Shuttle-Förderers 5 bzw. 105. Bei einer alternativen, in der Zeichnung nicht dargestellten Ausführungsform ist das Drehgestell stationär in der Mitte der Lackierkabine angebracht und der erste Shuttle-Förderer dient ausschließlich dazu, die Karosserie vom Förderer auf das Drehgestell und gegebenenfalls umgekehrt zu übergeben. Im übrigen verlaufen auch bei diesem Ausführungsbeispiel die Lackier- und Reinigungsvorgänge in der selben, oben geschilderten Weise.

## Patentansprüche

1. Anlage zum Pulverlackieren von Gegenständen, insbesondere von Fahrzeugkarosserien, mit
a) einer Lackierkabine, in welcher die Gegenstände während des Lackiervorganges anordenbar sind;
b) einer Mehrzahl von Applikationseinrichtungen für das Lackpulver, die in der Lackierkabine anordenbar sind und mit denen die dort befindlichen Gegenstände beaufschlagbar sind;
c) einer Rückgewinnungseinrichtung für Pulver-Overspray, die ihrerseits umfaßt:
ca) einen am Boden der Lackierkabine angeordneten Sammeltrichter, der eine untere Auslaßöffnung aufweist;
cb) einen Sammelbehälter für wiedergewonnenes Lackpulver;
cc) eine Abscheideeinrichtung;
cd) ein Sauggebläse, welches das sich im Sammeltrichter sammelnde Lackpulver durch die Auslaßöffnung des Sammeltrichters in die Abscheideeinrichtung saugt;
**dadurch gekennzeichnet, daß**
d) in der Lackierkabine (10; 110) ein Drehgestell (7; 107) angeordnet ist, auf dem die Gegenstände (2; 102) befestigbar sind und das um eine im wesentlichen vertikale Achse verdrehbar ist;
e) in unterschiedlichen Winkelpositionen bezogen auf die Achse des Drehgestells (7; 107) angeordnete Applikationseinrichtungen (55; 155) mit Lackpulver unterschiedlicher Farbe beschickbar sind;
f) eine Mehrzahl von Rückgewinnungseinrichtungen (21 bis 25, 27 bis 31; 121 bis 125, 127 bis 131) vorgesehen ist, die wahlweise mit der Auslaßöffnung (20; 120) des Sammeltrichters (18; 118) in Verbindung gebracht werden können.

2. Anlage nach Anspruch 1, **dadurch gekennzeichnet, daß** eine Reinigungsvorrichtung (15; 115) vorgesehen ist, mit welcher Lackpulver von den Wänden der Lackierkabine (10; 110) lösbar ist, und daß eine Sammeleinrichtung (26, 27; 126, 127) für Abfallpulver vorgesehen ist, welche während der Tätigkeit der Reinigungsvorrichtung (15; 115) in Verbindung mit der Auslaßöffnung (20; 120) des Sammeltrichters (18; 118) gebracht werden kann.

3. Anlage nach Anspruch 2, **dadurch gekennzeichnet, daß** die Reinigungsvorrichtung (15; 115) eine Blasvorrichtung ist.

4. Anlage nach Anspruch 3, **dadurch gekennzeichnet, daß** die Blasvorrichtung (15; 115) ein in Axialrichtung verschiebbares und um seine Achse verdrehbares Rohr (16; 116) umfaßt.

5. Anlage nach Anspruch 4, **dadurch gekennzeichnet, daß** am Ende des Rohres (16; 116) ein um eine zur Achse des Rohres (16; 116) senkrechte Achse verschwenkbarer Blasarm (17; 117) angebracht ist.

6. Anlage nach einem der vorhergehenden Ansprüche, **dadurch gekennzeichnet, daß** am unteren Ende des Sammeltrichters (18; 118) ein die Auslaßöffnung (20; 120) umgebender Flansch (19; 119) vorgesehen ist und daß jede Rückgewinnungseinrichtung (21 bis 25, 27 bis 31; 121 bis 125, 127 bis 131) und ggfs. die Sammeleinrichtung (26, 32) für Abfallpulver einen Saugrüssel (21 bis 26; 121 bis 126) aufweist, der zwischen einer erste Position, in der seine Ansaugöffnung durch den Flansch (19; 119) verschlossen ist, und einer zweiten Position, in welcher seine Ansaugöffnung mit der Auslaßöffnung (20; 120) des Sammeltrichters (18; 118) kommuniziert, hin und her bewegbar ist.

7. Anlage nach einem der vorhergehenden Ansprüche, bei welcher ein Fördersystem vorgesehen ist, mit welchem die Gegenstände in die Lackierkabine hinein und aus der Lackierkabine heraus gebracht werden können, **dadurch gekennzeichnet, daß** das Fördersystem einen Shuttle-Förderer (5; 105) aufweist, der in der Lage ist, mindestens einen Gegenstand (2; 102) in einer ersten Position außerhalb der Lackierkabine (10; 110) von einem anderen Teil (4; 104) des Fördersystems (1; 101) zu übernehmen und diesen Gegenstand (2; 102) in eine zweite Position innerhalb der Lackierkabine (10; 110) zu bringen.

8. Anlage nach Anspruch 7, **dadurch gekennzeichnet, daß** der Shuttle-Förderer (5; 105) einen auskragenden Ausleger (6; 106) aufweist, der in der zweiten Position in die Lackierkabine (10; 110) hineinragt.

9. Anlage nach Anspruch 8, **dadurch gekennzeichnet, daß** am Endbereich des Auslegers (6; 106) das Drehgestell (7; 107) angeordnet ist.

10. Anlage nach einem der Ansprüche 7 bis 9, **dadurch gekennzeichnet, daß** der Shuttle-Förderer (5) in der Lage ist, den mindestens einen Gegenstand (2) von seiner zweiten Position innerhalb der Lackierkabine (10) wieder zurück in seine erste Position auf dem anderen Teil (4) des Fördersystem (1) zu bringen.

11. Anlage nach einem der Ansprüche 7 bis 9, **dadurch gekennzeichnet, daß** ein zweiter Shuttle-Förderer (162) vorgesehen ist, welcher in der Lage ist, den mindestens einen Gegenstand (102) in dessen zweiter Position innerhalb der Lackierkabine (110) zu übernehmen und in einer dritten Position außerhalb der Lackierkabine (110) an einen weiteren Teil (163) des Fördersystems (101) zu übergeben.

## Claims

1. An installation for powder coating of articles, in particular vehicle bodies, having
a) a coating booth, in which the articles may be arranged during the coating process;
b) a plurality of application-devices for the powder coating, which may be arranged in the coating booth and which may act on the articles located therein;
c) a recovery device for powder overspray, which in turn comprises:
ca) a collecting hopper arranged at the bottom of the coating booth and comprising a lower outlet opening;
cb) a collecting vessel for recovered powder coating;
cc) a separating device;
cd) an extractor fan, which sucks the powder coating collecting in the collecting hopper through the outlet opening of the collecting hopper into the separating device
**characterised in that**
d) a rotary stand (7; 107) is arranged in the coating booth (10; 110), to which the articles (2; 102) may be attached and which may be rotated about a substantially vertical axis;
e) application devices (55; 155) arranged in various angular positions relative to the axis of the rotary stand (7; 107) may be charged with powder coating of various colours;
f) a plurality of recovery devices (21 to 25, 27 to 31; 121 to 125, 127 to 131) is provided, which may be brought as desired into connection with the outlet opening (20; 120) of the collecting hopper (18; 118).

2. An installation according to claim 1, **characterised in that** a cleaning device (15; 115) is provided, with which powder coating may be detached from the walls of the coating booth (10; 110), and **in that** a collecting device (26, 27; 126, 127) for waste powder is provided which may be brought into connection with the outlet opening (20; 120) of the collecting hopper (18; 118) while the cleaning device (15; 115) is active.

3. An installation according to claim 2, **characterised in that** the cleaning device (15; 115) is a blowing device.

4. An installation according to claim 3, **characterised in that** the blowing device (15; 115) comprises a tube (16; 116) displaceable in the axial direction and rotatable about its axis.

5. An installation according to claim 4, **characterised in that** a blowing arm (17; 117) swivellable about an axis perpendicular to the axis of the tube (16; 116) is attached to the end of the tube (16; 116).

6. An installation according to one of the preceding claims, **characterised in that** a flange (19; 119) surrounding the outlet opening (20; 120) is provided at the lower end of the collecting hopper (18; 118), and **in that** each recovery device (21 to 25, 27 to 31; 121 to 125, 127 to 131) and optionally the collecting device (26, 32) for waste powder comprises a suction discharge pipe (21 to 26; 121 to 126), which may be moved to and fro between a first position, in which its suction opening is closed by the flange (19; 119), and a second position, in which its suction opening communicates with the outlet opening (20; 120) of the collecting hopper (18; 118).

7. An installation according to one of the preceding claims, in which a conveying system is provided with which the articles may be brought into the coating booth and out of the coating booth, **characterised in that** the conveying system comprises a shuttle conveyor (5; 105), which is in a position to receive from another part (4; 104) of the conveying system (1; 101) at least one article (2; 102) in a first position outside the coating booth (10; 110) and to bring this article (2; 102) into a second position inside the coating booth (10; 110).

8. An installation according to claim 7, **characterised in that** the shuttle conveyor (5; 105) comprises a projecting extension arm (6; 106), which projects into the coating booth (10; 110) in the second position.

9. An installation according to claim 8, **characterised in that** the rotary stand (7; 107) is arranged at the end area of the extension arm (6; 106).

10. An installation according to one of claims 7 to 9, **characterised in that** the shuttle conveyor (5) is in a position to bring the article (2), of which there is at least one, back from its second position inside the coating booth (10) into its first position on the other part (4) of the conveying system (1).

11. An installation according to one of claims 7 to 9, **characterised in that** a second shuttle conveyor (162) is provided, which is in a position to receive the article (102), of which there is at least one, in the second position thereof inside the coating booth (110) and to transfer it to a further part (163) of the conveying system (101) in a third position outside the coating booth (110).

## Revendications

1. Installation de revêtement, à l'aide d'une laque pulvérulente, d'objets se présentant notamment comme des carrosseries de véhicules, comprenant
a) une cabine de laquage, dans laquelle les objets peuvent être disposés au cours de l'opération de laquage ;
b) une pluralité de dispositifs d'application de la laque pulvérulente, qui peuvent être placés dans ladite cabine de laquage et sont aptes à solliciter les objets logés dans cette dernière ;
c) un dispositif de récupération de poudre excédentaire, englobant à son tour :
ca) une trémie collectrice disposée au fond de la cabine de laquage, et dotée d'un orifice inférieur de sortie ;
cb) un réceptacle collecteur de laque pulvérulente récupérée ;
cc) un dispositif séparateur ;
cd) une soufflerie d'aspiration qui aspire vers ledit dispositif séparateur, à travers l'orifice de sortie de la trémie collectrice, la laque pulvérulente s'accumulant dans ladite trémie collectrice ;
**caractérisée par le fait**
d) **que** la cabine de laquage (10 ; 110) renferme un châssis tournant (7 ; 107) sur lequel les objets (2 ; 102) peuvent être fixés, et qui peut tourner autour d'un axe sensiblement vertical ;
e) **que** des dispositifs d'application (55 ; 155), occupant des positions angulaires différentes vis-à-vis de l'axe du châssis tournant (7 ; 107), peuvent être alimentés en laque pulvérulente de différentes couleurs ;
f) **qu'**une pluralité de dispositifs de récupération (21 à 25, 27 à 31 ; 121 à 125, 127 à 131) peuvent être sélectivement mis en liaison avec l'orifice de sortie (20 ; 120) de la trémie collectrice (18 ; 118).

2. Installation selon la revendication 1, **caractérisée par** la présence d'un dispositif de nettoyage (15 ; 115) à l'aide duquel de la laque pulvérulente peut être dissociée d'avec les parois de la cabine de laquage (10 ; 110) ; et par la présence d'un dispositif (26, 27 ; 126, 127) collecteur de poudre de rebut pouvant, lorsque ledit dispositif de nettoyage (15 ; 115) est en action, être mis en liaison avec l'orifice de sortie (20 ; 120) de la trémie collectrice (18 ; 118).

3. Installation selon la revendication 2, **caractérisée par le fait que** le dispositif de nettoyage (15 ; 115) est un dispositif à insufflation.

4. Installation selon la revendication 3, **caractérisée par le fait que** le dispositif à insufflation (15 ; 115) comprend une tubulure (16 ; 116) pouvant coulisser dans le sens axial et pouvant tourner autour de son axe.

5. Installation selon la revendication 4, **caractérisée par le fait qu'**un bras d'insufflation (17 ; 117), pouvant pivoter autour d'un axe perpendiculaire à l'axe de la tubulure (16 ; 116), est implanté à l'extrémité de ladite tubulure (16 ; 116).

6. Installation selon l'une des revendications précédentes, **caractérisée par** la présence, à l'extrémité inférieure de la trémie collectrice (18 ; 118), d'une bride (19 ; 119) ceinturant l'orifice de sortie (20 ; 120) ; et par le fait que chaque dispositif de récupération (21 à 25, 27 à 31 ; 121 à 125, 127 à 131) et, le cas échéant, le dispositif (26, 32) collecteur de poudre de rebut, comporte(nt) un museau d'aspiration (21 à 26 ; 121 à 126) mobile, à va-et-vient, entre une première position dans laquelle son orifice d'aspiration est obturé par ladite bride (19 ; 119), et une seconde position dans laquelle son orifice d'aspiration communique avec ledit orifice de sortie (20 ; 120) de ladite trémie collectrice (18 ; 118).

7. Installation selon l'une des revendications précédentes, dans laquelle est prévu un système de convoyage à l'aide duquel les objets peuvent être introduits dans la cabine de laquage et peuvent être extraits de ladite cabine de laquage, **caractérisée par le fait que** ledit système de convoyage comporte une navette convoyeuse (5 ; 105) en mesure de prélever, d'avec une autre partie (4; 104) dudit système de convoyage (1 ; 101), au moins un objet (2 ; 102) occupant une première position à l'extérieur de la cabine de laquage (10 ; 110) ; et d'amener cet objet (2 ; 102) à une deuxième position, à l'intérieur de ladite cabine de laquage (10 ; 110).

8. Installation selon la revendication 7, **caractérisée par le fait que** la navette convoyeuse (5 ; 105) présente un bras (6 ; 106) en porte-à-faux qui, dans la deuxième position, s'engage dans la cabine de laquage (10 ; 110).

9. Installation selon la revendication 8, **caractérisée par le fait que** le châssis tournant (7 ; 107) est situé sur la région extrême du bras (6 ; 106) en porte-à-faux.

10. Installation selon l'une des revendications 7 à 9, **caractérisée par le fait que** la navette convoyeuse (5) est en mesure de ramener l'objet (2) prévu au minimum, depuis sa deuxième position à l'intérieur de la cabine de laquage (10), à sa première position sur l'autre partie (4) du système de convoyage (1).

11. Installation selon l'une des revendications 7 à 9, **caractérisée par** la présence d'une seconde navette convoyeuse (162) en mesure de prélever l'objet (102) prévu au minimum, occupant sa deuxième position à l'intérieur de la cabine de laquage (110) ; et de le transférer, dans une troisième position située en dehors de ladite cabine de laquage (110), à une autre partie (163) du système de convoyage (101).
